# EUROPÄISCHE PATENTSCHRIFT

(11) **EP 1 138 369 B1**
(45) Veröffentlichungstag und Bekanntmachung des Hinweises auf die Patenterteilung: **12.09.2007**
(21) Anmeldenummer: 01107359.0
(22) Anmeldetag: 26.03.2001
(51) Int. Cl.: B01D 53/62, B01D 53/06, F23J 15/00

(54) **Verfahren zum Entfernen von Kohlendioxid aus dem Abgas einer Gasturbinenanlage sowie Vorrichtung zur Durchführung des Verfahrens**
Process for removing carbon dioxide from gas turbine exhaust gas and apparatus for conducting the process
Procédé pour éliminer le dioxyde de carbone du gaz d'échappement d'une turbine et dispositif pour exécuter le procédé

(30) Priorität: 31.03.2000 DE 10016079
(43) Veröffentlichungstag der Anmeldung: 04.10.2001
(73) Patentinhaber: Alstom Technology Ltd, 5400 Baden (CH)
(72) Erfinder: Baum, Jürgen, Dr., 68229 Mannheim (DE); Schimkat, Armin, 69469 Weinheim (DE)

(56) Entgegenhaltungen:
- US-A- 3 865 924
- US-A- 4 126 000
- US-A- 4 513 573
- US-A- 5 520 894

## Beschreibung

### TECHNISCHES GEBIET

Die vorliegende Erfindung bezieht sich auf die Gebiete der Kraftwerkstechnik, die den Betrieb einer Gasturbine einschliessen, beispielsweise Kombi-Kraftwerke. Sie betrifft ein Verfahren und eine Vorrichtung gemäss dem Oberbegriff des Anspruchs 1 bzw. des Anspruchs 6.

Ein solches Verfahren und eine solche Vorrichtung sind z.B. aus der Druckschrift US-A-5,832,712 bekannt.

### STAND DER TECHNIK

Im Zuge der zunehmenden Diskussion über mögliche Klimaveränderungen durch das Ansteigen der Kohlendioxidkonzentration in der Erdatmosphäre ("Treibhauseffekt"), das vor allem auf das Verbrennen fossiler Brennstoffe wie Erdgas, Erdöl und Kohle zurückzuführen ist, werden zunehmend auch Vorschläge unterbreitet, wie beispielsweise bei fossil befeuerten Kraftwerken aus den Rauchgasen des Kessels bzw. Abgasen von Gasturbinenanlagen das Kohlendioxid in grosstechnischem Massstab entfernt werden kann, bevor es in die Atmosphäre entlassen wird.

Einer dieser Vorschläge ist in der US-A-5,344,627 beschrieben. Dort wird das Rauchgas aus dem fossil befeuerten Kessel eines Dampfkraftwerkes im Gegenstrom mit einer Kohlendioxid absorbierenden Flüssigkeit in Kontakt gebracht, die beispielsweise ein Alkanolamin enthält. Das von der Flüssigkeit aufgenommene Kohlendioxid wird an einer anderen Stelle des Flüssigkeitskreislaufes wieder aus der Flüssigkeit entfernt und anschliessend verflüssigt. Der Flüssigkeitskreislauf mit den notwendigen Absorptions- und Regenerationssäulen erfordert einen erheblichen anlagentechnischen Aufwand.

Ein anderer aus der US-A5,665,319 bekannter Vorschlag zur Entfernung von Kohlendioxid aus einem kohlendioxidhaltigen Gas verwendet anstelle einer Flüssigkeit ein körniges Metalloxid, das durch Aufnahme von Kohlendioxid in ein Metallkarbonat umgewandelt und durch späteres Entfernen von Kohlendioxid wieder in das Metalloxid zurückverwandelt wird. Das körnige Pulver wird dabei entweder in einem Kreislauf zwischen einem Fixationsturm und einem Zerlegungsofen hin- und herbefördert, oder es werden zwei gleichartige Vorrichtungen mit einem festen Pulverbett eingesetzt, die durch Umschalten abwechselnd zur Aufnahme und Abgabe des Kohlendioxids eingesetzt werden. Nachteilig ist bei diesem Verfahren, dass die Vorrichtung, in der das Kohlendioxid wieder abgespalten wird, jeweils als fremdgeheizter Ofen betrieben werden muss.

In der eingangs genannten Druckschrift US-A-5,832,712 schliesslich wird vorgeschlagen, das Kohlendioxid aus dem Abgas einer Gasturbinenanlage zu entfernen, indem das Abgas nach dem Durchlaufen eines Abhitzekessels in einer Absorptionsäule mit einer Kohlendioxid absorbierenden Flüssigkeit in Kontakt gebracht wird. Auch hier ergibt sich als Nachteil der anlagentechnische Aufwand für den Flüssigkeitskreislauf der absorbierenden Flüssigkeit.

### DARSTELLUNG DER ERFINDUNG

Es ist daher Aufgabe der Erfindung, ein Verfahren und eine Vorrichtung anzugeben, die auf einfache Weise ein Entfernen von Kohlendioxid aus dem Abgas einer Gasturbinenanlage ermöglichen, wobei das Abgas im weiteren Verlauf einem Wärmerückgewinnungsprozess unterworfen wird.

Die Aufgabe wird durch die Gesamtheit der Merkmale der Ansprüche 1 und 6 gelöst. Der Kern der Erfindung besteht darin, die Entfernung des Kohlendioxids auf einem hohen Temperaturniveau bereits vor dem Wärmerückgewinnungsprozess vorzunehmen und für das Entfernen einen mit einer adsorbierenden Beschichtung ausgestatteten rotierenden, regenerativen Adsorber/Desorber einzusetzen, der zwischen dem Abgasstrom und einem separaten Kohlendioxidkreislauf arbeitet.

Eine erste bevorzugte Ausgestaltung des erfindungsgemässen Verfahrens ist dadurch gekennzeichnet, dass zwischen der Gasturbinenanlage und dem Adsorber/Desorber Wärme vom Abgas auf den Kohlendioxidkreislauf übertragen wird. Hierdurch wird im Kohlendioxidkreislauf auf einfache Weise ein gegenüber der Adsorptionsseite erhöhtes Temperaturniveau erreicht, das zur Freisetzung des adsorbierten Kohlendioxids im Adsorber/Desorber notwendig ist.

Der Temperaturunterschied zwischen der Adsorptions- und Desorptionsseite des Adsorbers/Desorbers kann weiter vergrössert werden, wenn gemäss einer anderen Weiterbildung des Verfahrens der Wärmerückgewinnungsprozess einen Wasser/Dampf-Kreislauf mit einem Abhitzekessel umfasst, und das Abgas nach der Wärmeübertragung auf den Kohlendioxidkreislauf und vor dem Eintritt in den Adsorber/Desorber zur Ueberhitzung von Dampf im Wasser/Dampf-Kreislauf verwendet wird.

Ist die Temperatur des Abgases beim Austritt aus der Gasturbine der Gasturbinenanlage für die Aufheizung des Kohlendioxidkreislaufes nicht ausreichend, ist es zweckmässig, das Abgas vor der Wärmeübertragung auf den Kohlendioxidkreislauf zusätzlich aufzuheizen.

Aus dem Kohlendioxidkreislauf wird schliesslich ein dem aus dem Abgas entfernten Kohlendioxid entsprechender Teilstrom abgezweigt und anschliessend abgekühlt.

Eine bevorzugte Ausgestaltung der Vorrichtung nach der Erfindung zeichnet sich dadurch aus, dass zwischen der Gasturbinenanlage und dem Adsorber/Desorber ein erster Wärmetauscher angeordnet ist, welcher mit dem Kohlendioxidkreislauf in Verbindung steht, dass die Wärmerückgewinnungsmittel einen Wasser/Dampf-Kreislauf mit einem Abhitzekessel umfassen, und dass zwischen dem ersten Wärmetauscher und dem Adsorber/Desorber ein zweiter Wärmetauscher zur Ueberhitzung des Dampfes im Wasser/Dampf-Kreislauf angeordnet ist.

Bevorzugt ist der Adsorber/Desorber nach Art eines beschichteten Ljungström-Wärmetauschers aufgebaut und mit einer grossen reaktiven Oberfläche für die Adsorption und Desorption von Kohlendioxid ausgestattet, wobei zur Verringerung der Wärmeübertragung zwischen dem Kohlendioxidkreislauf und der Adsorptionsseite das die Beschichtung tragende Trägermaterial oder eine zwischen der reaktiven Beschichtung des Adsorbers/Desorbers und dem Trägermaterial angeordnete Zwischenschicht eine geringe Wärmeleitfähigkeit aufweist.

Weitere Ausführungsformen ergeben sich aus den abhängigen Ansprüchen.

### KURZE ERLÄUTERUNG DER FIGUREN

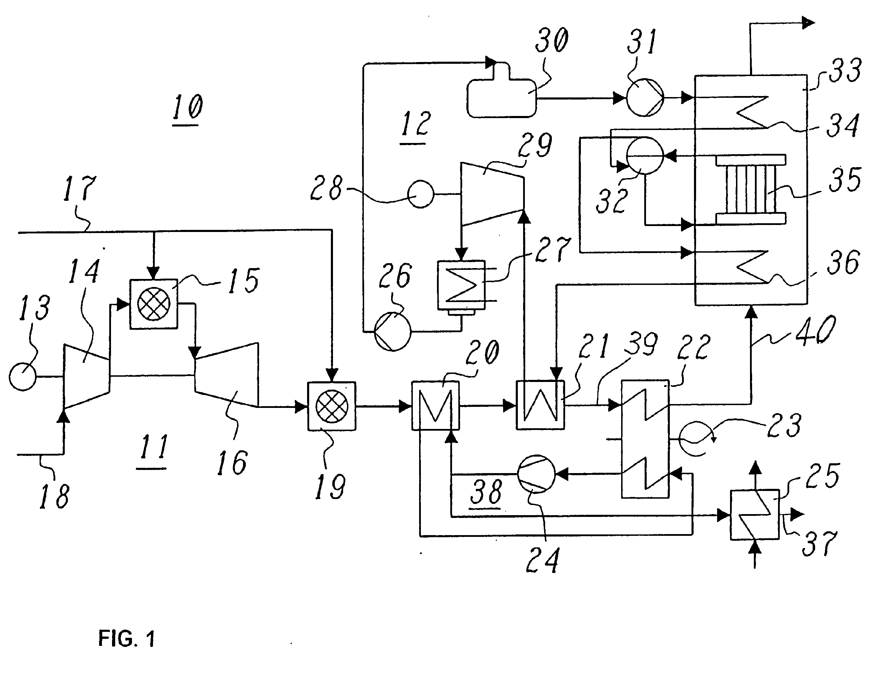

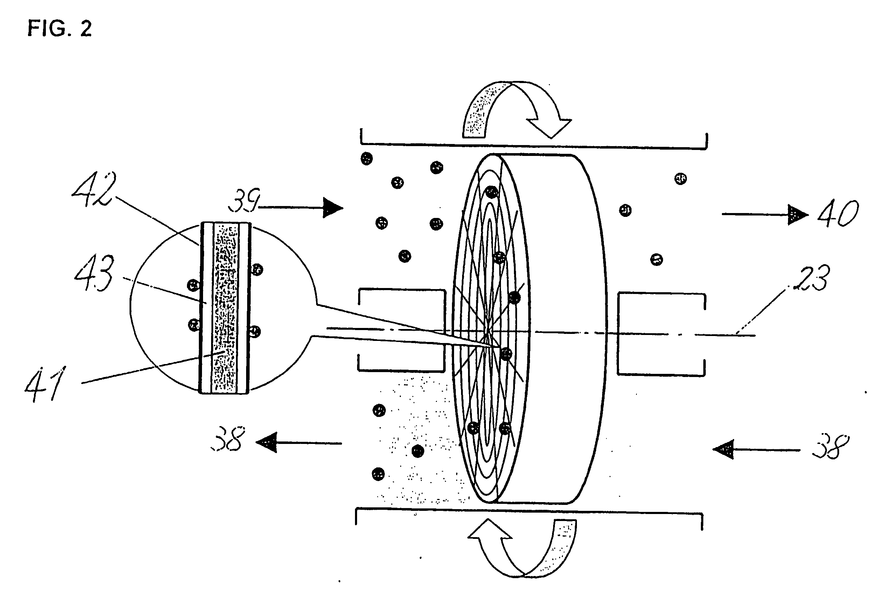

Die Erfindung soll nachfolgend anhand von Ausführungsbeispielen im Zusammenhang mit den Zeichnungen näher erläutert werden. Figur 1 zeigt das Schema eines bevorzugten Ausführungsbeispiels für eine Vorrichtung nach der Erfindung in der Gestalt eines Kombikraftwerkes, Figur 2 veranschaulicht ein Detail des Adsorbers/Desorbers.

### WEGE ZUR AUSFÜHRUNG DER ERFINDUNG

In der Figur 1 ist das Anlagenschema eines Kombikraftwerkes 10 mit einer Vorrichtung zur Entfernung vom Kohlendioxid aus dem Abgas dargestellt. Das Kombikraftwerk 10 umfasst im wesentlichen drei Anlagenteile, nämlich eine Gasturbinenanlage 11, einen Wasser/Dampf-Kreislauf 12 und einen Kohlendioxidkreislauf 38, die alle miteinander gekoppelt sind.

Die Gasturbinenanlage 11 umfasst einen Verdichter 14, eine erste Brennkammer 15 und eine Gasturbine 16. Der Verdichter saugt über eine Luftzuführung 18 Verbrennungsluft an, verdichtet sie. Die verdichtete Luft wird zur Verbrennung eines (flüssigen oder gasförmigen) Brennstoffes in der ersten Brennkammer 15 verwendet. Das bei der Verbrennung entstehende Heissgas wird in der Gasturbine 16 entspannt, die über einen gemeinsamen Rotor den Verdichter 14 antreibt und über einen angeschlossenen ersten Generator 13 Strom erzeugt. Das Abgas 39 aus der Gasturbine 15 wird nach Durchlaufen mehrerer Zwischenstufen (19, 20, 21, 22), auf die weiter unten noch näher eingegangen wird, durch einen im Wasser/Dampf-Kreislauf 12 liegenden Abhitzekessel (Heat Recovery Steam Generator HRSG) 33 geschickt, wo aus dem Abgas 40 Wärme zurückgewonnen und zur Erzeugung von Dampf verwendet wird. Im Rahmen der Erfindung kann anstelle des Abhitzekessels 33 bzw. des Wasser/Dampf-Kreislaufes 12 aber auch ein anderer Wärmerückgewinnungsprozess vorgesehen sein.

Im Abhitzekessel 33 wird Speisewasser, welches mittels einer Speisewasserpumpe 31 aus einem Speisewasserkessel/Deaerator 30 herangepumpt wird in einem Economizer 34 vorgewärmt, anschliessend in einem mit einer Dampftrommel 32 verbundenen Verdampfer 35 verdampft und anschliessend in einem Ueberhitzer 36 überhitzt. Der Frischdampf wird in einer Dampfturbine 29 entspannt, in einem nachfolgenden Kondensator 27 kondensiert und mittels einer Kondensatpumpe 26 in den Speisewasserkessel/Deaerator 30 zurückgepumpt. Die Dampfturbine 29, die üblicherweise mehrere Druckstufen umfasst, treibt einen zweiten Generator 28 an, kann aber auch mit der Gasturbine 16 gekoppelt sein.

Das aus der Gasturbine 16 kommende Abgas 39 enthält Kohlendioxid, das mit Hilfe der Anlagenteile 19-25 und 37, 38 aus dem Abgas entfernt und separat weiterverarbeitet wird. Der Kohlendioxidkreislauf 38 befindet sich dabei auf einer deutlich höheren Temperatur als das zum Abhitzekessel 33 strömende Abgas 40. Das Abgas 39 wird nach dem Verlassen der Gasturbine 16 zunächst in einer zweiten Brennkammmer 19, die wie die erste Brennkammer 15 über eine Brennstoffzuführung 17 mit Brennstoff versorgt wird, aufgeheizt. Die damit verbundene Temperaturerhöhung ermöglicht in einem nachfolgenden ersten Wärmetauscher 20 eine ausreichende Wärmeübertragung vom Abgas 39 auf den Kohlendioxidkreislauf 38. Es sei an dieser Stelle angemerkt, dass bei zukünftigen Gasturbinengenerationen mit noch höheren Auslasstemperaturen auf die zweite Brennkammer 19 möglicherweise verzichtet werden kann.

Bevor das Abgas 39 zur Entfernung des Kohlendioxids in einen um eine Drehachse 23 rotierenden, regenerativen Adsorber/Desorber 22 eintritt, wird das Abgas 39 in einem zweiten Wärmetauscher 21, der zur weiteren Ueberhitzung des Dampfes im Wasser/Dampf-Kreislauf 12 dient, weiter abgekühlt. Im rotierenden Adsorber/Desorber 22 wird das im Abgas 39 enthaltene Kohlendioxid auf einer reaktiven Adsorberoberfläche 42 bei einer niedrigeren Temperatur adsorbiert, rotiert dann um die Drehachse 23 zur Seite des Kohlendioxidkreislaufs 38 und wird dort bei den erhöhten Temperaturen desorbiert. Durch die rotierenden Bauteile des Adsorbers/Desorbers 22 wird jedoch nicht nur Kohlendioxid vom Abgasstrom 39 in den Kohlendioxidkreislauf 38 transportiert, sondern umgekehrt auch Wärme vom Kohlendioxidkreislauf 38 in den Abgasstrom 40. Dieser unerwünschte Wärmetransport kann dadurch begrenzt werden, dass entweder zwischen der reaktiven Oberflächenbeschichtung 42 und dem diese Beschichtung tragenden Trägermaterial (Rotor) 41 eine schlecht wärmeleitende Zwischenschicht 43 angeordnet ist oder das Trägermaterial 41 selbst wärmeisolierend wirkt.

Während das an Kohlendioxid arme Abgas 40 nach Verlassen des Adsorbers/Desorbers 22 zur Wärmerückgewinnung an den Abhitzekessel 33 weitergeleitet wird, wird von dem mittels eines Gebläses 24 im Kohlendioxidkreislauf 38 zirkulierenden Kohlendioxid ein Teilstrom, der dem aus dem Abgas 39 pro Zeiteinheit entfernten Kohlendioxid entspricht, abgezweigt und nach einer Abkühlung in einem weiteren Wärmetauscher 25 über einen Kohlendioxidauslass 37 zur weiteren Verwendung entnommen. Das zirkulierende Kohlendioxid wird im ersten Wärmetauscher 20 aufgeheizt, um im Adsorber/Desorber 22 die Desorption in Gang zu halten.

Der Adsorber/Desorber 22 ist vorzugsweise nach Art eines beschichteten Ljungström-Wärmetauschers aufgebaut. Seine wesentlichen Elemente sind eine um eine Drehachse 23 rotierende Trägerstruktur 41, beschichtet mit einem eine grosse Oberfläche aufweisenden Reaktionsmaterial 42 für die Absorption und Desorption von Kohlendioxid und gegebenenfalls einer wärmedämmenden Zwischenschicht 43. Solche Vorrichtungen sind an sich bekannt (siehe z.B. die Druckschriften US-A-3,865,924 oder US-A-5,464,468 oder US-A-4,778,492).

### BEZUGSZEICHENLISTE

- 10: Kombikraftwerk
- 11: Gasturbinenanlage
- 12: Wasser/Dampf-Kreislauf
- 13,28: Generator
- 14: Verdichter
- 15,19: Brennkammer
- 16: Gasturbine
- 17: Brennstoffzuführung
- 18: Luftzuführung
- 20,21,25: Wärmetauscher
- 22: Adsorber/Desorber (rotierend, regenerativ)
- 23: Drehachse
- 24: Gebläse
- 26: Kondensatpumpe
- 27: Kondensator
- 29: Dampfturbine
- 30: Speisewasserkessel/Deaerator
- 31: Speisewasserpumpe
- 32: Dampftrommel
- 33: Abhitzekessel (HRSG)
- 34: Economizer
- 35: Verdampfer
- 36: Ueberhitzer
- 37: Kohlendioxidauslass
- 38: Kohlendioxidkreislauf
- 39: kohlendioxidreiches Abgas
- 40: kohlendioxidarmes Abgas
- 41: Trägermaterial (Rotor)
- 42: adsorbierende/desorbierende Beschichtung
- 43: wärmedämmende Zwischenschicht

## Patentansprüche

1. Verfahren zum Entfernen von Kohlendioxid aus dem Abgas einer Gasturbinenanlage (11), welches Abgas einem nachgeschalteten Wärmerückgewinnungsprozess (12, 33), vorzugsweise im Abhitzekessel (33) eines Wasser/Dampfkreislaufes (12), unterzogen wird, **dadurch gekennzeichnet, dass** das Kohlendioxid aus dem Abgas (39) zwischen der Gasturbinenanlage (11) und einem Wärmerückgewinnungsprozess (12, 33) entzogen wird, und dass zum Entfernen des Kohlendioxides ein rotierender, regenerativer Adsorber/Desorber (22) verwendet wird, welcher mit seiner Adsorberseite in den Abgasstrom (39) und mit seiner Desorberseite in einen Kohlendioxidkreislauf (38) geschaltet ist.

2. Verfahren nach Anspruch 1, **dadurch gekennzeichnet, dass** zwischen der Gasturbinenanlage (11) und dem Adsorber/Desorber (22) Wärme vom Abgas (39) auf den Kohlendioxidkreislauf (38) übertragen wird.

3. Verfahren nach Anspruch 2, **dadurch gekennzeichnet, dass** der Wärmerückgewinnungsprozess einen Wasser/Dampf-Kreislauf (12) mit einem Abhitzekessel (33) umfasst, und **dass** das Abgas (39) nach der Wärmeübertragung auf den Kohlendioxidkreislauf (38) und vor dem Eintritt in den Adsorber/Desorber (22) zur Ueberhitzung von Dampf im Wasser/Dampf-Kreislauf (12) verwendet wird.

4. Verfahren nach einem der Ansprüche 2 und 3, **dadurch gekennzeichnet, dass** das Abgas (39) vor der Wärmeübertragung auf den Kohlendioxidkreislauf (38) zusätzlich aufgeheizt wird.

5. Verfahren nach einem der Ansprüche 1 bis 4, **dadurch gekennzeichnet, dass** aus dem Kohlendioxidkreislauf (38) ein dem aus dem Abgas entfernten Kohlendioxid entsprechender Teilstrom abgezweigt und anschliessend abgekühlt wird.

6. Vorrichtung zur Durchführung des Verfahrens nach einem der Ansprüche 1 bis 5, welche Vorrichtung eine Gasturbinenanlage (11) und nachgeschaltete Mittel (12, 33) zur Wärmerückgewinnung aus dem Abgas der Gasturbinenanlage (11) umfasst, **dadurch gekennzeichnet, dass** zwischen der Gasturbinenanlage (11) und den Wärmerückgewinnungsmitteln (12, 33) ein rotierender, regenerativer Adsorber/Desorber (22) angeordnet ist, welcher mit seiner Adsorberseite in den Abgasstrom und mit seiner Desorberseite in einen Kohlendioxidkreislauf (38) geschaltet ist.

7. Vorrichtung nach Anspruch 6, **dadurch gekennzeichnet, dass** zwischen der Gasturbinenanlage (11) und dem Adsorber/Desorber (22) ein erster Wärmetauscher (20) angeordnet ist, welcher mit dem Kohlendioxidkreislauf (38) in Verbindung steht.

8. Vorrichtung nach Anspruch 7, **dadurch gekennzeichnet, dass** die Wärmerückgewinnungsmittel einen Wasser/Dampf-Kreislauf (12) mit einem Abhitzekessel (33) umfassen, und **dass** zwischen dem ersten Wärmetauscher (20) und dem Adsorber/Desorber (22) ein zweiter Wärmetauscher (21) zur Ueberhitzung des Dampfes im Wasser/Dampf-Kreislauf (12) angeordnet ist.

9. Vorrichtung nach einem der Ansprüche 7 und 8, **dadurch gekennzeichnet, dass** vor dem ersten Wärmetauscher (20) eine zusätzliche Mittel (19) zur Aufheizung des Abgases (39) aus der Gasturbinenanlage (11) angeordnet sind.

10. Vorrichtung nach einem der Ansprüche 6 bis 9, **dadurch gekennzeichnet, dass** von dem Kohlendioxidkreislauf (38) ein Kohlendioxidauslass (37) abzweigt, und **dass** in dem Kohlendioxidauslass (37) ein Wärmetauscher (25) zur Abkühlung des abgezweigten Kohlendioxids angeordnet ist.

11. Vorrichtung nach einem der Ansprüche 6 bis 10, **dadurch gekennzeichnet, dass** der Adsorber/Desorber (22) nach Art eines beschichteten Ljungström-Wärmetauschers aufgebaut und mit einer grossen reaktiven Oberfläche (42) für die Adsorption und Desorption von Kohlendioxid ausgestattet ist.

12. Vorrichtung nach Anspruch 11, **dadurch gekennzeichnet, dass** zwischen der reaktiven Beschichtung (42) und dem diese Beschichtung tragenden Trägermaterial (41) eine schlecht wärmeleitende Zwischenschicht (43) angeordnet ist.

## Claims

1. Method for removing carbon dioxide from the exhaust gas from a gas turbine plant (11), which exhaust gas is subjected to a downstream heat recovery process (12, 33), preferably in the heat recovery steam generator (33) of a water/steam cycle (12), **characterized in that** the carbon dioxide is removed from the exhaust gas (39) between the gas turbine plant (11) and a heat recovery process (12, 33), and **in that** a rotating, regenerative adsorber/desorber (22) is used to remove the carbon dioxide, the adsorber side of which adsorber/desorber is connected into the exhaust gas stream (39) and the desorber side of which absorber/desorber is connected into a carbon dioxide cycle (38).

2. Method according to Claim 1, **characterized in that** heat is transferred from the exhaust gas (39) to the carbon dioxide cycle (38) between the gas turbine plant (11) and the adsorber/desorber (22).

3. Method according to Claim 2, **characterized in that** the heat recovery process comprises a water/steam cycle (12) with a heat recovery steam generator (33), and **in that** the exhaust gas (39), following the heat transfer to the carbon dioxide cycle (38) and prior to entry into the adsorber/desorber (22), is used to superheat steam in the water/steam cycle (12).

4. Method according to either of Claims 2 or 3, **characterized in that** the exhaust gas (39) is additionally heated prior to the heat transfer to the carbon dioxide cycle (38).

5. Method according to one of Claims 1 to 4, **characterized in that** a part stream which corresponds to the carbon dioxide which has been removed from the exhaust gas is branched off from the carbon dioxide cycle (38) and is then cooled.

6. Device for carrying out method according to one of Claims 1 to 5, which device comprises a gas turbine plant (11) and downstream means (12, 33) for recovering heat from the exhaust gas from the gas turbine plant (11), **characterized in that** a rotating, regenerative adsorber/desorber (22) is arranged between the gas turbine plant (11) and the heat recovery means (12, 33), the adsorber side of which adsorber/desorber is connected into the exhaust gas stream and the desorber side of which adsorber/desorber is connected into a carbon dioxide cycle (38).

7. Device according to Claim 6, **characterized in that** a first heat exchanger (20), which is in communication with the carbon dioxide cycle (38), is arranged between the gas turbine plant (11) and the adsorber/desorber (22).

8. Device according to Claim 7, **characterized in that** the heat recovery means comprise a water/steam cycle (12) with a heat recovery steam generator (33), and **in that** a second heat exchanger (21) for superheating the steam in the water/steam cycle (12) is arranged between the first heat exchanger (20) and the adsorber/desorber (22).

9. Device according to either of Claims 7 or 8, **characterized in that** an additional means (19) for heating the exhaust gas (39) from the gas turbine plant (11) is arranged upstream of the first heat exchanger (20).

10. Device according to one of Claims 6 to 9, **characterized in that** a carbon dioxide outlet (37) branches off from the carbon dioxide cycle (38), and **in that** a heat exchanger (25) for cooling the carbon dioxide which has been branched off is arranged in the carbon dioxide outlet (37).

11. Device according to one of Claims 6 to 10, **characterized in that** the adsorber/desorber (22) is constructed in the manner of a coated Ljungström heat exchanger and is equipped with a large reactive surface (42) for the adsorption and desorption of carbon dioxide.

12. Device according to Claim 11, **characterized in that** an intermediate layer (43) of low thermal conductivity is arranged between the reactive coating (42) and the core material (41) which bears this coating.

## Revendications

1. Procédé d'élimination du dioxyde de carbone présent dans les gaz d'échappement d'une installation (11) de turbine à gaz, lesquels gaz d'échappement subissent en aval une opération (12, 33) de récupération de chaleur, de préférence dans une chaudière de récupération (33) d'un circuit d'eau et de vapeur (12), **caractérisé en ce que** le dioxyde de carbone est extrait des gaz d'échappement (39) entre l'installation (11) de turbine à gaz et l'opération (12, 33) de récupération de chaleur et **en ce que** pour extraire le dioxyde de carbone, on utilise un adsorbeur-désorbeur (22) rotatif à régénération dont le côté adsorbeur est raccordé dans l'écoulement (39) de gaz d'échappement et le côté désorbeur dans un circuit (38) de dioxyde de carbone.

2. Procédé selon la revendication 1, **caractérisé en ce que** de la chaleur est transmise des gaz d'échappement (39) au circuit (38) de dioxyde de carbone entre l'installation (11) de turbine à gaz et l'adsorbeur-désorbeur (22).

3. Procédé selon la revendication 2, **caractérisé en ce que** l'opération de récupération de chaleur comprend un circuit (12) d'eau et de vapeur doté d'une chaudière de récupération (33) et **en ce que** les gaz d'échappement (39) sont utilisés pour surchauffer de la vapeur dans le circuit d'eau et de vapeur (12) après le transfert de chaleur vers le circuit (38) de dioxyde de carbone et avant leur entrée dans l'adsorbeur-désorbeur (22).

4. Procédé selon l'une des revendications 2 et 3, **caractérisé en ce que** les gaz d'échappement (39) sont encore chauffés avant le transfert de chaleur vers le circuit (38) de dioxyde de carbone.

5. Procédé selon l'une des revendications 1 à 4, **caractérisé en ce que** l'on dérive du circuit (38) de dioxyde de carbone une partie de l'écoulement qui correspond au dioxyde de carbone extrait des gaz d'échappement et qu'ensuite on le refroidit.

6. Dispositif en vue de la mise en oeuvre du procédé selon l'une des revendications 1 à 5, lequel dispositif comprend une installation (11) de turbine à gaz en aval de laquelle sont raccordés des moyens (12, 33) de récupération de chaleur des gaz d'échappement de l'installation (11) de turbine à gaz, **caractérisé en ce qu'**un adsorbeur-désorbeur (22) rotatif à régénération dont le côté adsorbeur est raccordé dans l'écoulement de gaz d'échappement et le côté désorbeur dans un circuit (38) de dioxyde de carbone est prévu entre l'installation (11) de turbine à gaz et les moyens (12, 33) de récupération de chaleur.

7. Dispositif selon la revendication 6, **caractérisé en ce qu'**entre l'installation (11) de turbine à gaz et l'adsorbeur-désorbeur (22) est disposé un premier échangeur de chaleur (20) qui communique avec le circuit (38) de dioxyde de carbone.

8. Dispositif selon la revendication 7, **caractérisé en ce que** les moyens de récupération de chaleur comprennent un circuit (12) d'eau et de vapeur qui présente une chaudière de récupération (33) et **en ce qu'**entre le premier échangeur de chaleur (20) et l'adsorbeur-désorbeur (22) est disposé un deuxième échangeur de chaleur (21) de surchauffe de la vapeur dans le circuit (12) d'eau et de vapeur.

9. Dispositif selon l'une des revendications 7 et 8, **caractérisé en ce qu'**en amont du premier échangeur de chaleur (20) est prévu un moyen (19) supplémentaire de chauffage des gaz d'échappement (39) qui sortent de l'installation (11) de turbine à gaz.

10. Dispositif selon l'une des revendications 6 à 9, **caractérisé en ce qu'**une sortie (37) de dioxyde de carbone sort du circuit (38) de dioxyde de carbone et **en ce qu'**un échangeur de chaleur (25) de refroidissement du dioxyde de carbone extrait est disposé dans la sortie (37) de dioxyde de carbone.

11. Dispositif selon l'une des revendications 6 à 10, **caractérisé en ce que** l'adsorbeur-désorbeur (22) est construit à la manière d'un échangeur de chaleur de Ljungström revêtu et est doté d'une grande surface réactive (42) qui adsorbe et désorbe le dioxyde de carbone.

12. Dispositif selon la revendication 11, **caractérisé en ce qu'**entre le revêtement réactif (42) et le matériau de support (41) qui porte le revêtement est disposée une couche intermédiaire (43) mauvaise conductrice de la chaleur.
